# EUROPÄISCHE PATENTSCHRIFT

(11) **EP 0 532 142 B1**
(45) Veröffentlichungstag und Bekanntmachung des Hinweises auf die Patenterteilung: **14.02.1996**
(21) Anmeldenummer: 92250255.4
(22) Anmeldetag: 10.09.1992
(51) Int. Cl.: G01N 29/04

(54) **Verfahren und Vorrichtung zum Prüfen ferromagnetischer Werkstücke mittels Ultraschallwellen**
Method and apparatus for ultrasonic testing of ferromagnetic work-pieces
Procédé et dispositif de contrôle des pièces ferromagnétiques par ultrasons

(30) Priorität: 13.09.1991 DE 4130935
(43) Veröffentlichungstag der Anmeldung: 17.03.1993
(73) Patentinhaber: MANNESMANN Aktiengesellschaft, D-40027 Düsseldorf (DE)
(72) Erfinder: Wächter, Michael, W-4030 Ratingen 8 (DE)
(74) Vertreter: Presting, Hans-Joachim, Dipl.-Ing.

(56) Entgegenhaltungen:
- EP-A- 0 045 412
- EP-A- 0 069 865
- DE-A- 3 834 248
- GB-A- 2 040 584

## Beschreibung

Die Erfindung betrifft ein Verfahren zum Prüfen ferromagnetischer Werkstücke mittels Ultraschallwellen gemäß dem Gattungsbegriff des Hauptanspruches.

Bei der elektrodynamischen Ultraschallprüfung mit gekoppelten Sende-Empfangssystemen kommt es aufgrund von induktiven Kopplungen während und direkt nach dem Senden zu einer übersteuerung des Empfangssystems. Für eine gewisse Zeit nach dem Senden können keine Ultraschallsignale empfangen werden. Da man auch prüfkopfnahe Fehler im Werkstück nachweisen und geringe Wanddicken messen will, ist man bestrebt, die sogenannte Tot-Zone möglichst klein zu halten.

Zur Verringerung der Tot-Zone sind verschiedene Maßnahmen ergriffen worden, so zum Beispiel die Unterdrückung der nicht erwünschten Ultraschallanregungen durch den Einbau von schalldämpfenden Mitteln (DE 38 34 248).

Damit war es möglich, bei der elektrodynamischen Fehlerprüfung (Winkeleinschallung) die Tot-Zone auf 15 bis 12 Mikrosekunden zu verkürzen.

Aufgabe der Erfindung ist es, ein verbessertes Verfahren zum Prüfen von ferromagnetischen Werkstücken mi-ttels Ultraschallwellen mit einem gekoppelten Sende- und Empfangsspulensystem anzugeben, mit dem prüfkopfnahe Fehler bei Winkeleinschallung im Bereich von < 10 mm nachweisbar und Wanddicken < 2 mm gemessen werden können.

Diese Rufgabe wird mit den im kennzeichnenden Teil des Hauptanspruches angegebenen Merkmalen gelöst. Vorteilhafte Weiterbildungen sowie eine Vorrichtung zur Durchführung des Verfahrens sind Bestandteil von Unteransprüchen.

Zum besseren Verständnis der bisher vorgenommen totzonenverkürzenden Maßnahmen ist es zweckmäßig, die Tot-Zone in drei Bereiche zu unterteilen:
Einen ersten Bereich, in dem der Sendestrom auf die Sendespulen gegeben wird. Hier wird über den Trafoeffekt des Empfangssystems zu erzwungenen, übersteuerten Schwingungen angeregt.
Einen zweiten Bereich, die Erholungsphase des Empfangssystems. Hier fängt das System bedingt an zu arbeiten, indem es von der letzten durch den Sendestrom erzwungenen Übersteuerung langsam auf die Nullinie einschwingt.
Einen dritten Bereich, wo das Gesamtsystem durch Ultraschallschwingungen selbst angeregt wird, wobei die beiden erstgenannten Bereiche elektrisch bedingt sind.

Eine Verkürzung der Tot-Zone bei gekoppelten Sende-Empfangsspulensystemen kann über die Unterdrückung unerwünschter Ultraschallanregung im Prüfkopf selbst (Bereich 3) hinaus nur über den zweiten Bereich der Tot-Zone, die Erholungsphase des Empfangssystems erfolgen. Dazu wird vorgeschlagen, durch eine geeignete elektrische oder induktive Einkopplung in das Empfangssystem das Ausklingen zu dämpfen, wobei die im Empfangssystem erfolgte Einkopplung der letzten durch den Sendestrom erzeugten übersteuerung entgegengerichtet ist. Mit dieser Maßnahme wird die Tot-Zone z.B. bei einer Winkeleinschallung auf Werte von kleiner 7 Mikrosekunden reduziert.

Bei einer elektrischen Einkopplung muß zunächst der zeitliche Amplitudenverlauf des in den Empfangskreis eingekoppelten Singals an den Verlauf der Erholungsphase des Empfangssystems (Bereich 2) angepaßt werden. Ist der Amplitudenverlauf ermittelt, so muß dieser mit jedem Sendeimpuls entsprechend zeitsynchronisiert in das Empfangssystem eingespeist werden. Durch geeignete, bekannte elektronische Schaltungen muß die für die elektrische Einkopplung erforderliche Signalquelle vor während des ersten Bereichs der Tot-Zone im Empfangssystem induzierten Hochspannungen geschützt werden.

Die vorgeschlagene Maßnahme zur Dämpfung der übersteuerung beim Ausklingen ist dann besonders wirksam, wenn ein Teil des magnetischen Wechselfeldes, das zur koppelmittelfreien, magnetostriktiven Ultraschallanregung erforderlich ist, in das Spulensystem induktiv eingekoppelt wird.

Für die praktische Realisierung wird eine Prüfvorrichtung vorgeschlagen, bei der die beiden Polschuhe des Magnetjoches direkt an den Sender- und Empfangsmäander anliegen und auf der prüflingsabgewandten Seite der Mäander ein mit einem Polschuh des Wechselfeldmagneten magnetisch leitend verbundenes ferromagnetisches Koppelstück angeordnet ist. Dieses Koppelstück wird vorzugsweise aus einem an sic-h bekannten weichmagnetischen Pulververbundwerkstoff mit geringer elektrischer Leitfähigkeit unter dem Handelsnamen Corovac (siehe Prospekt der Firma Vacuumschmelze/Hanau, Ausgabe 3187) hergestellt und überdeckt ein Drittel bis zwei Drittel des PoLschuhabstandes bzw. der Mäanderrückseite. Die gewünschte Tot-Zonen-Verringerung wird aber nur dann erreicht, wenn die im Empfangssystem hervorgerufene Induktion amplitudenmässig so abgestimmt ist, daß sie durch den Sendestrom verursachte ausklingende Übersteuerung kompensiert und das Nachschwingen des Empfangssystems dämpft. Die Amplitude der induktiven Einkopplung im Empfangssystem kann beeinflußt werden durch
- die Amplitude und das Anstiegs- bzw. Abklingverhalten des magnetischen Wechselfeldes
- die Wahl des Werkstoffs des Koppelstückes
- die Veränderung des Abstandes Koppelteil zu Mäanderrückseite
- die Veränderung des Abstandes Koppelteil zu Polschuh.

Für die beiden letztgenannten Einflußfaktoren wird vorzugsweise für den Abstand Koppelstück/Mäanderrückseite ein Wert von 0,5 mm und für den Abstand Koppelstück zu Polschuh ein Wert gegen 0 mm vorgeschlagen. Dies bedeutet, daß im Sonderfall das Koppelstück direkt am Polschuh anliegt. Bei dieser Konstellation ist aber darauf zu achten, daß das induktiv eingekoppelte Magnetfeld nicht zu stark wird, so daß die übersteuerung überkompensiert wird und negative Werte annimmt. Besonders vorteilhaft ist die Prüfvorrichtung dann, wenn das Magnetjoch als Ringjoch ausgebildet ist.

In der Zeichnung werden anhand einiger Darstellungen das erfindungsgemäße Verfahren sowie die erfindungsgemäße Vorrichtung näher erläutert.

Es zeigen:
- Figur 1: eine schematische Darstellung der erfindungsgemäßen US-Prüfvorrichtung
- Figur 2: ein A-Bild mit horizontalem Magnetfeld aber ohne Einkopplung
- Figur 3: wie Fig. 2 jedoch mit optimaler induktiver Einkoppelung
- Figur 4a: Darstellung des Magnetstromverlaufes mit synchronisierter elektrodynamischer Prüfung und optimaler induktiver Einkoppelung
- Figur 4b: wie Fig. 4a aber in laufzeitmäßig gespreizter Darstellung
- Figur 5a: wie Fig. 4a aber mit entgegengesetzt gerichteter induktiver Einkoppelung
- Figur 5b: wie Fig. 5a aber in laufzeitmäßig gespreizter Darstellung.

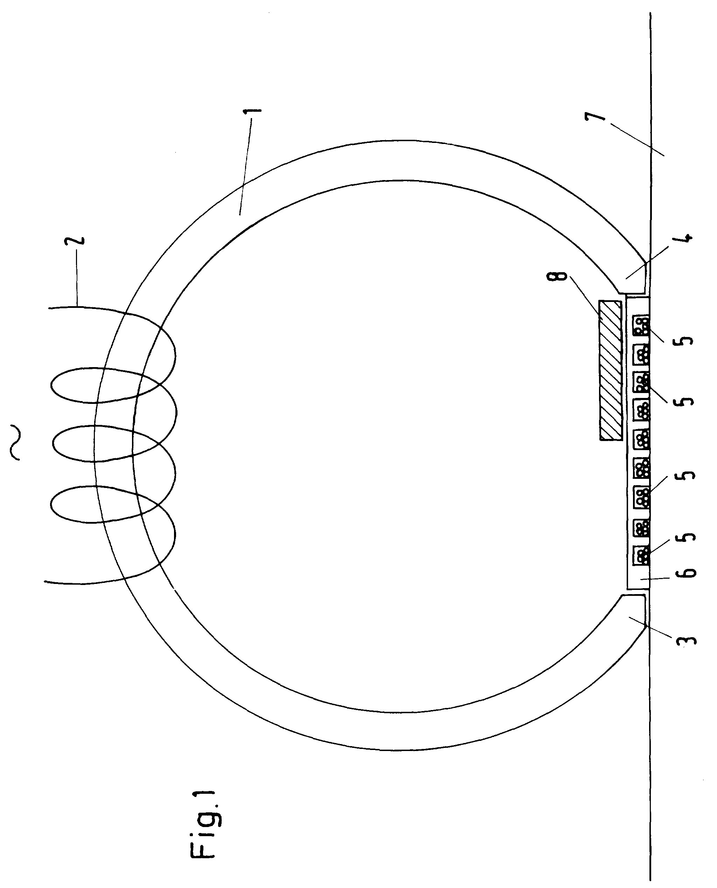

Figur 1 zeigt in einer schematischen Darstellung die erfindungsgemäße US-Prüfvorrichtung. Zur Erzeugung des horizontalen magnetischen Wechselfeldes weist die Prüfvorrichtung als Magneten ein Ringjoch 1 und eine Wechselfeldspule 2 auf. Zwischen den Polschuhen 3,4 des Magneten 1 ist das Spulensystem, hier ausgebildet als Sende- und Empfangsmäander 5, angeordnet. Das Spulensystem 5 wird gehalten durch einen unmagnetischen Wandlerträger 6, z. B. Kunststoff. Das zu prüfende Werkstück 7 bewegt sich dicht unterhalb des Spulensystems 5 relativ zur Prüfvorrichtung. Für die erfindungsgemäße Einkoppelung ist auf der prüflingsabgewandten Seite des Spulensystems 5 ein ferromagnetisches Koppelstück 8 angeordnet. Dieses bedeckt einen Teil des Spulensystems 5, hier in dieser Darstellung beispielsweise etwa 50 % der Breite. Um eine optimale Kompensation der übersteuerung des Empfangssystems zu erreichen, ist der Abstand Kopplungsstück 8/Spulensystem 5 und auch der Abstand Kopplungsstück 8/Polschuh 4 veränderbar. Für den erstgenannten Abstand liegt die Variationsbreite im Bereich von 0 - 1 mm und für den zweitgenannten Abstand im Bereich von 0 - 10 mm.

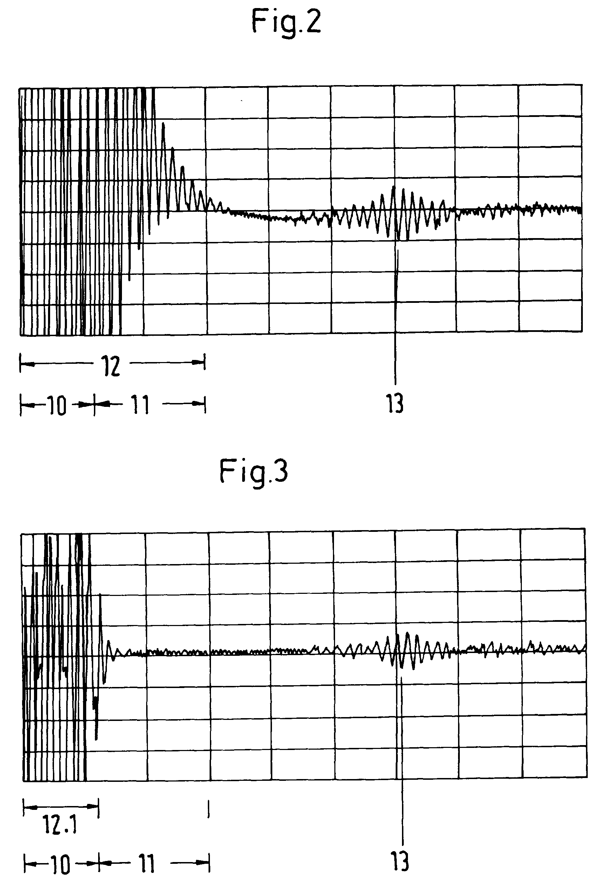

Die Wirkung der vorgeschlagenen induktiven Einkoppelung ist in den nachfolgenden Figuren 2 - 5 dargestellt. Figur 2 zeigt das A-Bild mit horizontalem Magnetfeld ohne die erfindungsgemäße Einkoppelung. Der erste Bereich der Impulsabfolge ist der Bereich 10 der erzwungenen Schwingung. Der anschließende Bereich ist der Bereich 11 der Erholungsphase des Empfangssystems. Die Summe aus beiden ist der Totzonenbereich 12, der für eine Signalauswertung nicht genutzt werden kann. In diesem Beispiel wurde ein künstlicher Fehler 13 angeschallt, der weit genug entfernt angeordnet war, so daß er auch mit der sehr breiten Totzone 12 identifiziert werden konnte. Die erfindungsgemäße Verbesserung zeigt Fig. 3, bei der durch eine optimale induktive Einkoppelung der Bereich der Erholungsphase 11 nahezu gegen Null kompensiert wurde und die verbleibende Totzone 12.1 praktisch mit dem Bereich der erzwungenen Schwingung 10 zusammenfällt.

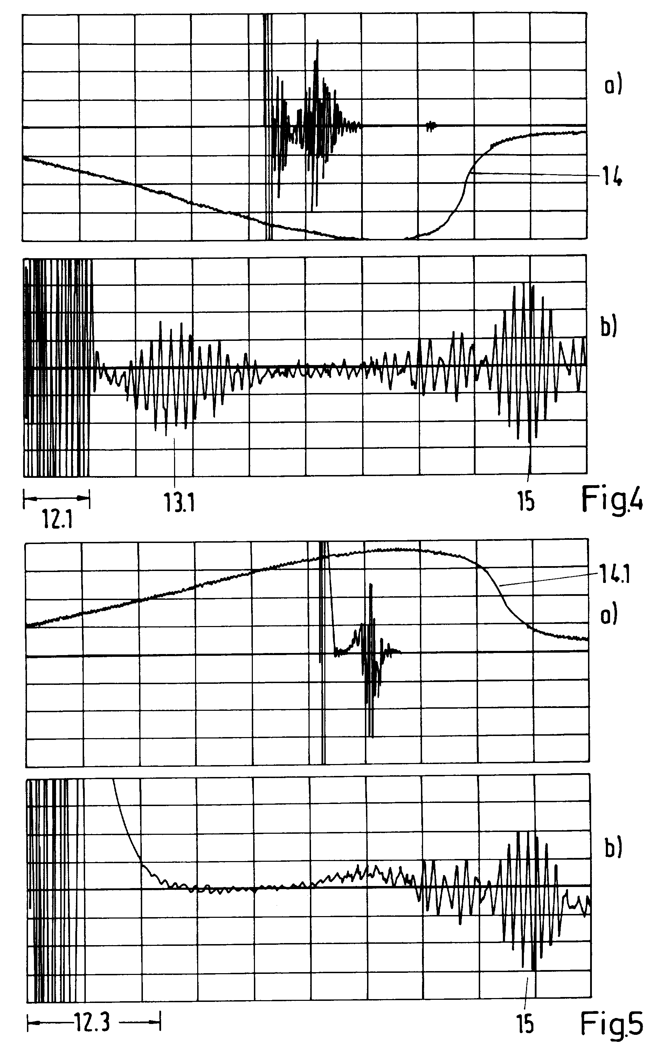

In den Figuren 4a und 5a ist zusätzlich zum Prüfbild der Magnetstromverlauf 14, 14.1 mit aufgetragen worden. In Fig. 4a ist der Magnetstromverlauf 14 optimal im Sinne der Kompensation und das laufzeitmäßig gespreizte Bild Fig. 4b zeigt deutlich die stark verkürzte Totzone 12.1 und das eindeutig identifizierbare Fehlerecho 13.1. Der Vollständigkeit halber ist in dieser Darstellung auch noch das Kantenecho 15 mit abgebildet. Demgegenüber ist in Fig. 5a die Situation dargestellt, die sich ergibt, wenn der Magnetstromverlauf 14.1 invertiert wird. Das ist gleichbedeutend mit einem Wechsel der magnetischen Polung des Ringmagneten 1. Dann vergrößert sich die Totzone 12.3 wieder ganz erheblich und die Prüfempfindlichkeit wird so stark verschlechtert, daß das Fehlerecho 13.1 nicht mehr zu erkennen ist. Unverändert dagegen ist das Kantenecho 15 eindeutig zu identifizieren.

## Patentansprüche

1. Verfahren zum Prüfen ferromagnetischer Werkstücke mittels Ultraschallwellen, wobei über ein an die Oberfläche des Werkstückes angelegtes, mit Wechselstrom erregtes Magnetsystem ein alternierendes, parallel zur Oberfläche im Werkstück ausgerichtetes Magnetisierungsfeld erzeugt wird und durch ein in der Nähe der Oberfläche des Werkstückes angeordnetes gekoppeltes Sende-Empfangsspulensystem Hochfrequenz-Sendeimpulse ausgelöst werden, die nach dem Senden aufgrund induktiver Kopplungen zu einer Übersteuerung des Empfangssystems führen,
**dadurch gekennzeichnet,** daß im Bereich der Erholungsphase des Empfangssystems durch eine geeignete elektrische oder induktive Einkopplung in das Empfangssystem das Ausklingen gedämpft wird.

2. Verfahren nach Anspruch 1,
**dadurch gekennzeichnet,** daß ein Teil des magnetischen Wechselfeldes in das Spulensystem induktiv eingekoppelt wird, wobei die im Empfangssystem durch das Wechselfeld hervorgerufene Induktion der letzten durch den Sendestrom erzwungenen Übersteuerung entgegengerichtet ist.

3. Vorrichtung zur Durchführung des Verfahrens nach Anspruch 1 bestehend aus einem Magnetjoch (1) und einem zwischen den Polschuhen (3, 4) des Magnetjoches angeordneten gekoppelten Sende- und Empfangsspulensystem mit ineinander verschachtelten Sende- und Empfangsmäandern (5),
**dadurch gekennzeichnet,** daß die beiden Polschuhe (3, 4) des Magnetjoches (1) dicht an den Sende- und Empfangsmäandem (5) anliegen und auf der prüflingsabgewandten Seite der Mäander (5) ein mit einem Polschuh (4) des Wechselfeldmagneten magnetisch leitend verbundenes ferromagnetisches Koppelstuck (8) angeordnet ist.

4. Vorrichtung nach Anspruch 3,
**dadurch gekennzeichnet,** daß das ferromagnetische Koppelstück (1) ein Drittel bis zwei Drittel des Polschuhabstandes (3, 4) bzw. der Mäanderrückseite (5) überdeckt.

5. Vorrichtung nach Anspruch 3 oder 4,
**dadurch gekennzeichnet,** daß der Abstand zwischen ferromagnetischem Koppelstück (8) und Mäanderrückseite (5) im Bereich von 0 bis 1 mm liegt.

6. Vorrichtung nach Anspruch 3 oder 4,
**dadurch gekennzeichnet,** daß der Abstand zwischen dem ferromagnetischen Koppelstück (8) und dem Polschuh (4) im Bereich von 0 bis 10 mm liegt.

7. Vorrichtung nach einem der Ansprüche 3 bis 6,
**dadurch gekennzeichnet,** daß das ferromagnetische Koppelstück (8) aus einem an sich bekannten weichmagnetischen Pulververbundwerkstoff mit geringer elektrischer Leitfähigkeit hergestellt ist.

8. Vorrichtung nach einem der Ansprüche 3 bis 7,
**dadurch gekennzeichnet,** daß das Magnetjoch als Ringjoch (1) ausgebildet ist.

## Claims

1. Process for testing ferromagnetic workpieces by means of ultrasonic waves whereby an alternating magnetizing field is produced parallel to a surface or a workpiece, in a said workpiece, by means of a magnet system, energized by an alternating current, applied onto a surface of a workpiece, and high-frequency transmission pulses are released, by means of a coupled transmission-reception system disposed close to a surface of a workpiece concerned, said pulses leading to over-excitation of a receiver system, as a result of inductive coupling, after transmission,
**wherein**
drop-off in a recovery phase of a receiver system is damped by means of suitable electrical or inductive coupling.

2. Process in accordance with claim 1,
**wherein**
part of an alternating magnetic field is inductively coupled into a coil system, whereby induction caused in a receiver system by an alternating field acts against over-excitation caused by a transmission current.

3. Device for carrying out a process in accordance with claim 1,
comprising a magnet yoke (1) and a coupled transmission-reception coil system, with transmission and reception loops (5) being inserted one into another, disposed between pole pieces (3, 4) of a magnet yoke, wherein both of two pole pieces (3, 4) of a magnet-yoke (1) lie close up against transmission and reception loops (5) and a ferromagnetic coupling piece (8), magnetically conductively connected to a pole piece (4) of alternating-field magnets, is disposed on a side of a loop (5) facing away from a test-piece.

4. Device in accordance with claim 3,
**wherein**
a ferromagnetic coupling piece (8) covers a third to two thirds of a separation between pole pieces (3, 4) or a rear side of a loop (5).

5. Device in accordance with claim 3 or 4,
**wherein**
a separation between a ferromagnetic coupling piece (8) and a rear side of a loop (5) is from 0 to 1 mm.

6. Device in accordance with claim 3 or 4,
**wherein**
a separation between a ferromagnetic coupling piece (8) and a pole piece (4) is from 0 to 10 mm.

7. Device in accordance with any one of claims 3 to 6,
**wherein**
a ferromagnetic coupling piece (8) is produced from a known lightly magnetic connecting powder material with slight electrical conductivity.

8. Device in accordance with any one of claims 3 to 7,
**wherein**
a magnet yoke is developed as a circular yoke (1).

## Revendications

1. Procédé pour contrôler des pièces ferromagnétiques au moyen d'ondes ultrasonores, un champ de magnétisation alternant et orienté parallèlement à la surface de la pièce étant engendré par l'intermédiaire d'un système magnétique disposé contre la surface de la pièce et excité par du courant alternatif, et des impulsions d'émission à hautes fréquences étant déclenchées par un système d'émission et de réception à bobines, couplé et agencé à proximité de la surface de la pièce, impulsions d'émission à hautes fréquences qui entraînent après l'émission, en raison de couplages inductifs, une surcommande du système de réception,
caractérisé en ce que, dans la zone de la phase de régénération du système de réception, par un couplage électrique ou inductif approprié dans le système de réception, on amortit la perte.

2. Procédé selon la revendication 1,
caractérisé en ce qu'une partie du champ magnétique alternatif est couplé inductivement dans le système à bobines, l'induction provoquée dans le système de réception par le champ alternatif étant de sens opposé à la dernière surcommande provoquée par le courant d'émission.

3. Dispositif pour la mise en oeuvre du procédé selon la revendication 1, comportant une culasse d'aimant (1) et un système d'émission et de réception à bobines, couplé, agencé entre les pièces polaires (3, 4) de la culasse d'aimant, et comportant des méandres d'émission et de réception (5) intercalés,
caractérisé en ce que les deux pièces polaires (3, 4) de la culasse d'aimant (1) reposent de façon jointive contre les méandres d'émission et de réception (5), et une pièce de couplage ferromagnétique (8) reliée de façon magnétiquement conductrice à une pièce polaire (4) de l'aimant à champ alternatif est agencée sur la face opposée au contrôle des méandres (5).

4. Dispositif selon la revendication 3,
caractérisé en ce que la pièce de couplage ferromagnétique (8) recouvre un tiers, jusqu'à deux tiers, de l'écartement des pièces polaires (3, 4) ou de la face arrière des méandres (5).

5. Dispositif selon l'une des revendications 3 ou 4,
caractérisé en ce que l'écartement entre la pièce de couplage ferromagnétique (8) et la face arrière des méandres (5) est situé dans le domaine de 0 à 1 mm.

6. Dispositif selon l'une des revendications 3 ou 4,
caractérisé en ce que l'écartement entre la pièce de couplage ferromagnétique (8) et la pièce polaire (4) est situé dans le domaine de 0 à 10 mm.

7. Dispositif selon l'une des revendications 3 à 6,
caractérisé en ce que la pièce de couplage ferromagnétique (8) est réalisée à partir d'un matériau composite pulvérulent connu, magnétique doux, et présentant une conductibilité électrique réduite.

8. Dispositif selon l'une des revendications 3 à 7,
caractérisé en ce que la culasse d'aimant est réalisée sous forme d'une culasse annulaire (1).
